Europäisches Patentamt

**European Patent Office**

Office européen des brevets

(19)

(11) Numéro de publication: **0 018 295**
**B1**

(12) FASCICULE DE BREVET EUROPEEN

(45) Date de publication du fascicule du brevet:
06.04.83

(51) Int. Cl.³: **H 04 B 17/02**

(21) Numéro de dépôt: **80400542.9**

(22) Date de dépôt: **21.04.80**

(54) **Système de surveillance pour liaisons de télécommunication équipées de répéteurs-régénérateurs.**

(30) Priorité: **19.04.79 FR 7909840**

(43) Date de publication de la demande:
**29.10.80 Bulletin 80/22**

(45) Mention de la délivrance du brevet:
**06.04.83 Bulletin 83/14**

(84) Etats contractants désignés:
**BE CH DE GB IT LI NL**

(56) Documents cités:

**DE-A-2 522 441**
**DE-A-2 725 152**
**US-A-3 987 395**

**«A 120 Mb/s DIGITAL TRANSMISSION SYSTEM ON COAXIAL CABLE» P.J. WAKELING - POINT-TO-POINT COMMUNICATION. Vol. 18 No. 1 Janvier 1974**

Le dossier contient des informations techniques présentées postérieurement au dépôt de la demande et ne figurant pas dans le présent fascicule.

(73) Titulaire: **SOCIETE ANONYME DE TELECOMMUNICATIONS, 41, rue Cantagrel, F-75624 Paris Cedex 13 (FR)**

(72) Inventeur: **Bertin, Marcel Raoul, 21, Allée de Trévise, F-92330 Sceaux (FR)**
Inventeur: **Boutmy, Patrick Emile, 49, Boulevard Lannes, 75016 Paris (FR)**
Inventeur: **Le Fort, Gilbert Jean, Kerbilhoat, 22300 Lannion (FR)**
Inventeur: **Walraet, Jean Gaston, Pen-Keryvon Brélevenez, 22300 Lannion (FR)**

(74) Mandataire: **Martinet, René et al, Cabinet Martinet 62, rue des Mathurins, F-75008 Paris (FR)**

## Système de surveillance pour liaisons de télécommunication équipées de répéteurs-régénérateurs

L'invention concerne d'une façon générale les liaisons de transmission par signaux multiplex à division de fréquence et par signaux multiplex à division du temps, équipées de répéteurs-régénérateurs. Plus particulièrement, elle a trait à un système conforme au préambule de la revendication 1 pour surveiller des répéteurs-régénérateurs insérés en parallèle sur une liaison de télécommunication entre une station surveillante et une station surveillée et pour en contrôler les performances et identifier les répéteurs-régénérateurs défectueux. D'une façon plus précise, la fonction de ce système de surveillance est de transmettre à un point de contrôle et de commande des informations relatives à l'état de marche et de bon fonctionnement des répéteurs-régénérateurs, ce point de contrôle et de commande étant normalement la station surveillante.

Il est bien connu de munir les répéteurs-régénérateurs de circuits de détection d'erreurs. L'information d'erreur à recueillir dans chaque répéteur-régénérateur est obtenue en échantillonnant l'état d'un certain nombre de bascules de déclenchement d'alarme et en comptant le nombre d'erreurs sur le code utilisé en ligne et en codant ce nombre. Le tableau de valeurs binaires ainsi obtenu est emmagasiné dans un registre dans le répéteur-régénérateur. Par exemple, si le code en ligne est le code bipolaire, le circuit de détection d'erreurs compte le nombre de viols de bipolarité. Si le code en ligne est le code HDBn, le circuit de détection d'erreurs compte le nombre de séquences contenant plus de n zéros.

Le tableau de données binaires dans le registre est alors pulsé hors du registre à une cadence prévue pour les signaux de supervision et est utilisé pour moduler une porteuse. Le signal résultant peut alors être démodulé à l'extrémité de la ligne et interprété comme il convient.

L'article intitulé «A 120 Mb/s digital transmission system on coaxial cable» de P.J. WAKELING, paru dans Point-to-Point Communication, vol. 18, n° 1, janvier 1974, divulgue un système de supervision pour liaison numérique dans laquel une pluralité de porteuses à audio-fréquence, associée chacune avec un répéteur-régénérateur téléalimenté, sont modulées par une signalisation binaire identifiant les répéteurs-régénérateurs défectueux. Dans ce système de supervision, il y a besoin d'autant de porteuses que de répéteurs-régénérateurs plus une fréquence de cadence de transmission d'erreurs et d'au moins deux filtres passe-bas dans chaque répéteur-régénérateur afin de séparer la porteuse associée et la fréquence de cadence de transmission d'erreurs.

Dans le brevet américain US-A-3 987 395 délivré le 19 octobre 1976, on a décrit un autre système de télésurveillance pour liaisons numériques équipées de répéteurs-régénérateurs à deux fils, c'est-à-dire à une seule direction d'amplification. Conformément à ce brevet, chaque répéteur-régénérateur est muni d'un détecteur et compteur d'erreurs dont la sortie alimente un codeur de débit d'erreurs, lui-même connecté à un registre de supervision. Le répéteur-régénérateur reçoit une trame de multiplexage à division du temps, avec un mot de verrouillage de trame, et il comprend des moyens de restaurer les impulsions d'horloge de la trame et des moyens de compter les fentes temporelles successives de la trame et des moyens d'introduire le contenu du registre de supervision dans la fente temporelle dont le numéro est attribué au répéteur-régénérateur.

Un tel système n'est pas adapté à la surveillance d'une liaison équipée de répéteurs-régénérateurs à deux directions dans laquelle l'information de supervision produite dans un répéteur-régénérateur donné est envoyée à partir de ce répéteur-régénérateur à la station surveillante, par la voie de retour. Dans le système de répéteurs-régénérateurs à une direction, la trame progresse dans la direction aller tandis que dans un système de répéteurs-régénérateurs à deux directions, chaque fente temporelle de la trame, une fois remplie dans un répéteur-régénérateur donné aurait à faire demi-tour par la voie de retour. Tout se passe comme si la trame perdait une fente temporelle à chaque répéteur-régénérateur et le système du brevet américain précité ne saurait convenir à une liaison quatre fils.

De plus dans ce brevet américain, le signal de commande dans la liaison doit comprendre à la fois un signal à basse fréquence et les signaux d'horloge définissant la trame multiplex à division du temps et les répéteurs-régénérateurs doivent comprendre des moyens de récupération d'horloge.

Le but de la présente invention est de réaliser un système de surveillance des répéteurs-régénérateurs à deux directions dans une liaison à deux sens de propagation qui ne comprenne qu'un unique signal à basse fréquence modulé et mélangé en fréquence avec les signaux de données à transmettre dans la voie d'aller en vue de commander la transmission de signaux de données d'erreurs à partir de chaque répéteur-régénérateur vers la station surveillante et qui est également réutilisé pour moduler les signaux de données d'erreurs transmis sur la voie de retour. A cette fin, le système de surveillance des répéteurs-régénérateurs est tel que défini dans la revendication 1.

Dans chaque répéteur-régénérateur, un mot de supervision est stocké dans un registre à décalage et les impulsions de progression de lecture dudit registre à décalage sont obtenues par division de fréquence de la fréquence du signal à basse fréquence modulé par les impulsions de commande. Le mot de supervision est complété par un bit de start, un bit de stop, et éventuellement un bit de parité et plusieurs bits formant l'adresse du répéteur-régénérateur. Le mot de supervision ainsi complété est utilisé pour moduler le signal à basse fréquence et le mot de supervision start-stop modulant est envoyé à la station surveillante.

D'autres objets, caractéristiques et avantages de la présente invention apparaîtront mieux à la lecture de la description de détail qui va être maintenant entreprise en relation avec les dessins annexés dans lesquels:

la fig. 1 est un diagramme de blocs d'une liaison en câble coaxial équipée avec des répéteurs-régénérateurs à deux directions et conforme à l'invention;

la fig. 2 représente l'arrangement interne d'un répéteur-régénérateur dans un système de télésurveillance conforme à l'invention; et

la fig. 3 représente l'arrangement interne de la station surveillante dans un système de télésurveillance conforme à l'invention.

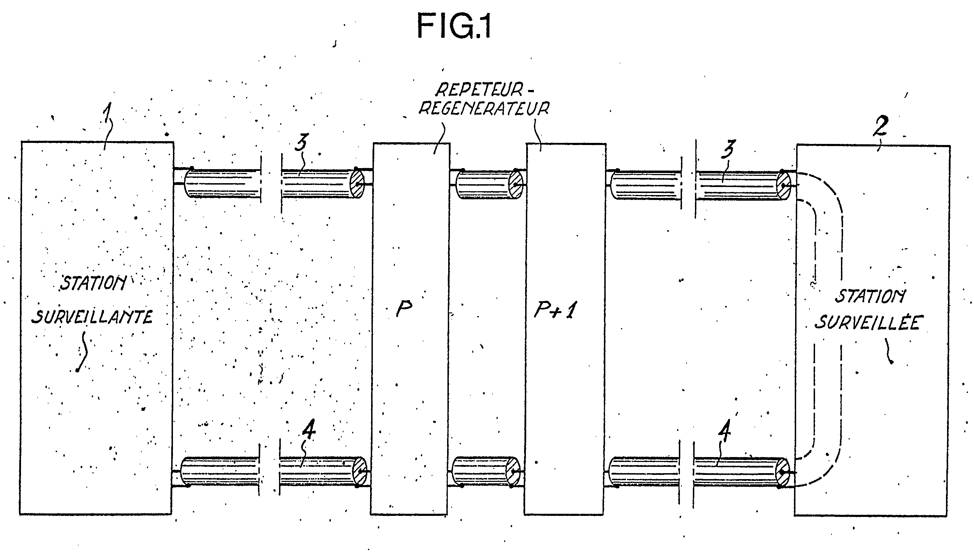

En se référant d'abord à la fig. 1, les numéros de référence 1 et 2 désignent respectivement la station surveillante et la station surveillée. Ces deux stations sont reliées par deux lignes coaxiales 3 et 4 le long desquelles sont disposés, à intervalles réguliers, des répéteurs-régénérateurs à deux directions, dont deux seulement sont représentés et désignés par P et P + 1.

La station surveillante 1 envoie, vers la station surveillée 2 sur la ligne coaxiale dite d'aller 3, des signaux analogiques, ou des signaux de données numériques, un signal à une fréquence basse prédéterminée modulé par des impulsions de commande périodiques $LF_1$ et un courant d'alimentation. La station surveillante 1 reçoit, par la ligne coaxiale 4, le signal à basse fréquence $LF_1$ modulé par les mots de supervision complétés fournis par les répéteurs-régénérateurs et le retour du courant d'alimentation. Il y a lieu de noter que chaque répéteur-régénérateur à deux directions est alimenté en deux points par le courant de téléalimentation à partir de la ligne coaxiale d'aller 3 et de la ligne coaxiale de retour 4.

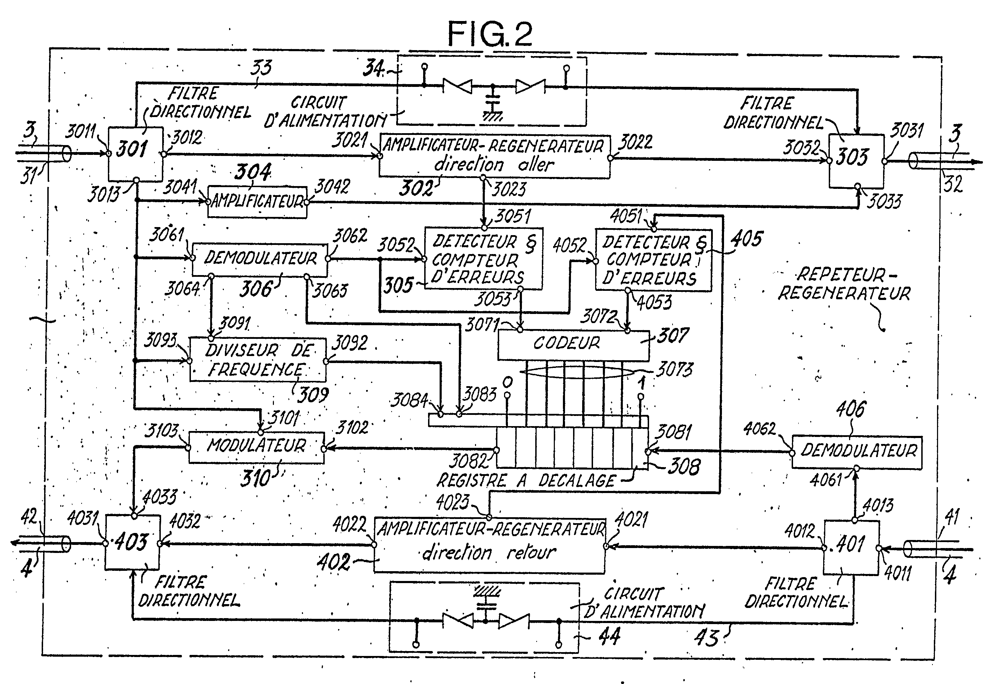

Dans la fig. 2 qui représente le répéteur-régénérateur télésurveillé P, la ligne coaxiale d'aller 3 entre dans le répéteur-régénérateur par la borne 31 et la ligne coaxiale d'aller 3 quitte le répéteur-régénérateur par la borne 32. D'une façon semblable, la ligne coaxiale de retour 4 entre dans le répéteur-régénérateur par la borne 41 et la ligne coaxiale de retour 4 quitte le répéteur-régénérateur par la borne 42.

Les bornes d'entrée 31 et 41 sont respectivement reliées aux bornes d'entrée 3011 et 4011 de filtres directionnels d'entrée 301 et 401 qui séparent, les uns des autres, les signaux de données, les impulsions de commande modulant le signal à basse fréquence et le courant continu d'alimentation. Les signaux de données apparaissent sur les bornes de sortie 3012 et 4012 des filtres directionnels d'entrée 301 et 401 respectivement et, à partir de là, ils sont appliqués aux amplificateurs-régénérateurs d'aller 302 et de retour 402 de répéteur-régénérateur P, puis aux filtres directionnels de sortie 303 et 403, respectivement.

D'une façon plus précise, les bornes de sortie 3012 et 4012 des filtres directionnels d'entrée 301 et 401 sont connectées aux bornes d'entrée 3021 et 4021 des amplificateurs-régénérateurs 302 et 402. Les bornes de sortie 3022 et 4022 de ces amplificateurs-régénérateurs sont connectées aux bornes d'entrée 3032 et 4032 des filtres directionnels de sortie 303 et 403 et les bornes de sortie 3031 et 4031 de ces filtres directionnels de sortie sont connectés aux bornes 32 et 42 du répéteur-régénérateur à deux directions P.

Les impulsions de commande apparaissent sur la borne de sortie 3013 du filtre directionnel d'entrée 301 qui est connectée à la borne d'entrée 3041 d'un amplificateur des impulsions de commande 304 dans lequel le signal à basse fréquence modulé par les impulsions de commande est amplifié. Après amplification, les impulsions de commande disponibles sur la borne de sortie 3042 de l'amplificateur 304 sont appliquées à la borne d'entrée 3033 du filtre directionnel de sortie 303. Ainsi, il y a un canal amplificateur 301-302-303 et 401-402-403 pour les signaux de données dans le sens d'aller et dans le sens de retour et un canal amplificateur 301-304-303 pour les impulsions de commande dans le sens d'aller seulement. De plus, un canal pour le courant continu, respectivement 33 et 43, est prévu entre les filtres directionnels d'entrée et de sortie 301 et 303, et 401 et 403, chacun de ces canaux comprenant, inséré dans le canal, un circuit d'alimentation de puissance, respectivement 34 et 44.

Les amplificateurs-régénérateurs proprement dits 302 et 402 ont des sorties 3023 et 4023 connectées aux entrées 3051 et 4051 de deux détecteurs et compteurs d'erreurs 305 et 405. Ces détecteurs et compteurs d'erreurs ont leurs sorties 3053 et 4053 connectées aux entrées 3071 et 3072 d'un codeur 307. Finalement, les sorties 3073 du codeur sont connectées aux entrées de chargement en parallèle correspondantes d'un registre à décalage 308.

La borne de sortie 3013 du filtre directionnel 301 est connecté à l'entrée 3061 d'un démodulateur 306 et à l'entrée 3101 d'un modulateur 310. Une borne de sortie 3062 du démodulateur 306 délivre une première impulsion vers des bornes 3052 et 4052 pour commander le transfert des données d'erreurs des détecteurs et compteurs d'erreurs 305 et 405 vers le codeur 307 ainsi que l'effacement de ces détecteurs et compteurs d'erreurs. Une autre borne de sortie 3063 du démodulateur 306 délivre une seconde impulsion vers une borne 3083 pour commander le chargement des données d'erreurs codées du codeur 307 dans le registre à décalage 308. Au moment où il est chargé par les données d'erreurs, le registre à décalage 308 est également chargé par un 1 à son étage de poids binaire le plus élevé et par un 0 à son étage binaire zéro. Eventuellement, le registre 308 peut être également chargé par un bit de parité et plusieurs bits formant l'adresse du répéteur-régénérateur, qui sont enregistrés dans une mémoire morte. Le mot ainsi chargé forme le mot de supervision d'erreurs complété. Le mot de supervision d'erreurs complété forme ainsi un mot start-stop arythmique tel que les mots qui représentent les caractères dans une liaison télégraphique télex. Le démodulateur 306 démodule des impulsions de commande modulant le signal à basse fréquence, ayant une durée relativement longue. A partir du front avant de chaque impulsion démodulée, le démodulateur 306 produit trois impulsions successives comme déjà dit. La première impulsion est destinée au transfert des données d'erreurs des détecteurs et compteurs d'erreurs 305 et 405 vers le codeur 307 et à l'effacement des détecteurs et codeurs d'erreurs à travers les bornes 3052 et 4052, et la seconde impulsion est destinnée au chargement du registre à décalage 308 par les données d'erreurs et par les bits de start et de stop et autres complétant le mot de supervision à travers la borne 3083. Une troisième impulsion est destinée à synchronisation d'un diviseur de fréquence 309 à travers des bornes 3064 et 3091.

Le diviseur de fréquence 309 reçoit par sa borne 3093 le signal à basse fréquence $LF_1$ et par sa borne 3091 l'impulsion de synchronisation venant du démodulateur 306 et il produit sur sa borne de sortie 3092 des impulsions de progression de lecture pour le registre à décalage 308 qui sont appliquées à ce dernier par une borne 3084.

Le codeur 307 peut être de tout type connu. Deux exemples de code de supervision d'erreurs sont données dans le tableaux I et II ci-dessous:

TABLEAU I

| Erreurs détéctées et comptées par période de mesure | Code |
|---|---|
| Pas d'erreur | 000 |
| 1 erreur | 001 |
| 2 à $2^3$ - 1 erreurs | 010 |
| $2^3$ à $2^5$ - 1 erreurs | 011 |
| $2^5$ à $2^7$ - 1 erreurs | 100 |
| $2^7$ à $2^9$ - 1 erreurs | 101 |
| $\geqslant 2^9$ erreurs | 110 |
| manque total de signal | 111 |

Le codeur a alors huit positions de bit: $2 \times 3 = 6$ positions de bit de code, une position de bit de start et une position de bit de stop.

TABLEAU II

| Erreurs détéctées et comptées par période de mesure | Code |
|---|---|
| Inutilisé | 0000 |
| Pas d'erreur | 0001 |
| 1 erreur | 0010 |
| 2 à $2^2$ - 1 erreurs | 0011 |
| $2^2$ à $2^3$ - 1 erreurs | 0100 |
| $2^3$ à $2^4$ - 1 erreurs | 0101 |
| $2^4$ à $2^5$ - 1 erreurs | 0110 |
| $2^5$ à $2^6$ - 1 erreurs | 0111 |
| $2^6$ à $2^7$ - 1 erreurs | 1000 |
| $2^7$ à $2^8$ - 1 erreurs | 1001 |
| $2^8$ à $2^9$ - 1 erreurs | 1010 |
| $2^9$ à $2^{10}$ - 1 erreurs | 1011 |
| $2^{10}$ à $2^{11}$ - 1 erreurs | 1100 |
| $\geqslant 2^{11}$ erreurs | 1101 |
| manque total du signal | 1110 |
| inutilisée | 1111 |

Le codeur a alors dix positions de bit: $2 \times 4 = 8$ positions de bit de code, une position de bit de start et une position de bit de stop.

Le signal à basse fréquence $LF_1$ est également appliqué à la borne d'entrée 3101 du modulateur 310 qui reçoit les bits lus du mot de supervision d'erreurs sortant en série du registre à décalage 308, à travers les bornes 3082 et 3102 et applique au filtre directionnel 403, à travers les bornes 3103 et 4033, le signal à basse fréquence modulé par les bits de supervision d'erreurs.

Pour fixér les idées, la fréquence prédéterminée du signal à basse fréquence $LF_1$ peut être de 4 kHz et le facteur de division du diviseur de fréquence 309 peut être 32. La cadence des impulsions de lecture à la borne 3092 du diviseur de fréquence, et donc la cadence de bit est ainsi de 125 bits par seconde.

Il apparaît clairement au stade actuel de la description que le signal à basse fréquence $LF_1$ traverse les répéteurs-régénérateurs dans le sens d'aller en suivant un chemin de dérivation (by-pass) 301, 304, 303 dans lequel il est amplifié et se trouve également bouclé entre la borne d'entrée 31 de la ligne d'aller et la borne de sortie 42 de la ligne de retour dans chaque répéteur-régénérateur, la boucle comprenant un modulateur 310 en série et un démodulateur 306 en parallèle. Le démodulateur 306 associé à un diviseur de fréquence 309 commande les détecteurs et compteurs d'erreurs 305, 405 et le registre de mot de supervision d'erreurs 308 et le mot que contient ce registre sert à moduler le signal à basse fréquence bouclé dans le modulateur 310 qui transmet ainsi à la station surveillante l'information de supervision d'erreurs.

Durant leurs parcours vers la station surveillante 1, les mots de supervision d'erreurs complétés modulant le signal à basse fréquence $LF_1$ traversent dans la direction de retour d'autres répéteurs-régénérateurs. Dans ces répéteurs-régénérateurs, les signaux de données et le signal à basse fréquence modulé sont séparés dans le filtre directionnel d'entrée 401, puis le signal à basse fréquence modulé est appliqué à travers des bornes 4013 et 4061 à un démodulateur 406. Finalement, la borne de sortie 4062 du démodulateur 406 délivre à la borne de sortie 3081 du registre à décalage 308 les bits sérialisés des mots de supervision d'erreurs complétés provenant des répéteurs-régénérateurs en amont du répéteur-régénérateur considéré sur la ligne de retour. Du registre à décalage, les mots de supervision d'erreurs en provenance des autres répéteurs-régénérateurs sont traités comme les mots de supervision d'erreurs en provenance du codeur du répéteur-régénérateur considéré à cette exception près que possédant déjà leurs bits de start, de stop et éventuellement d'adresse, il n'est pas nécessaire de leur ajouter ces bits.

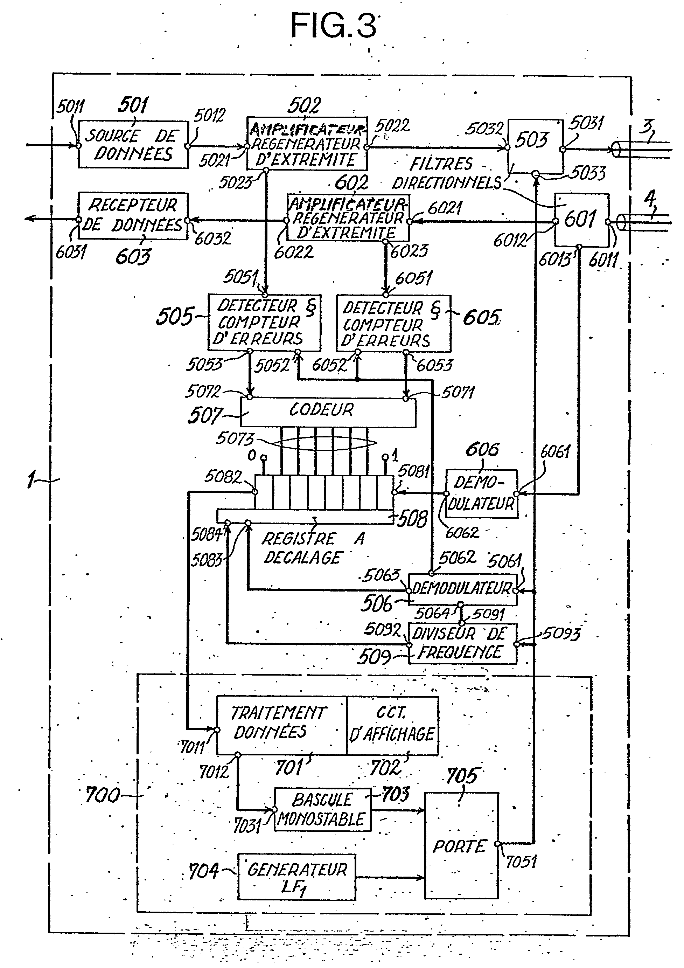

La fig. 3 représente la station surveillante. Elle comprend un répéteur-régénérateur à deux directions local qui inclut pour la direction d'aller un amplificateur-régénérateur d'extrémité 502 absolument identique à l'amplificateur-régénérateur 302 et pour la direction de retour un amplificateur-régénérateur d'extrémité 602 absolument identique à l'amplificateur-régénérateur 402. Le répéteur-régénérateur local inclut également des détecteurs et compteurs d'erreurs 505 et 605, un codeur 507, un registre à décalage 508, un démodulateur 506, un diviseur de fréquence 509 et un démodulateur 606 qui ont des fonctions respectivement similaires à celles des détecteurs et compteurs d'erreurs 305 et 405, du codeur 307, du registre à décalage 308, du démodulateur 306, du diviseur de fréquence 309 et du démodulateur 406. Les circuits et les bornes de circuit ayant les mêmes fonctions dans les figures 2 et 3 ont des numéros de référence différant de 200 les uns des autres. Comme les circuits ayant des numéros de référence correspondants dans les figures 2 et 3 sont identiques, il n'est pas nécessaire de les décrire une seconde fois.

Une source de données 501 telle que le circuit de modulation d'un modem reçoit par sa borne d'entrée 5011 les signaux de données en bande de base d'un transmetteur (non représenté) et une onde porteuse et est reliée, à travers des bornes 5012 et 5021 à l'amplificateur-régénérateur de sens d'aller 502. D'une façon symétrique, l'amplificateur-régénérateur de sens de retour 602 est relié, à travers des bornes 6022 et 6032, à un récepteur de données 603 tel que le circuit de démodulation du modem qui transmet par sa borne 6031 les signaux de données en bande de base à un récepteur de données (non représenté) tel qu'une imprimante. Les circuits 501 et 603 comprennent également des moyens de séparation entre l'onde porteuse modulée par les signaux de données et un courant d'alimentation. L'onde porteuse a une fréquence différente de la fréquence du signal $LF_1$.

La station de surveillance 1 comprend aussi un étage de traitement de données 700 composé d'un circuit de traitement 701 et d'un circuit d'affichage 702. Le circuit de traitement de données 701 comprend un circuit de reconnaissance des bits start et stop et éventuellement des mots d'adresse complétant les mots de supervision d'erreurs en provenance du registre à décalage 508 et un décodeur qui décode les données d'erreurs, ce décodeur étant semblable à ceux utilisés dans les téléimprimeurs arythmiques start-stop. Ces mots sont décodés selon le tableau précédent I ou II en forme de caractères qui sont affichés par le circuit d'affichage 702. Le circuit de traitement de données 701 comprend également des moyens pour produire une impulsion initialisant le début du cycle de l'acquisition des erreurs après un certain délai suivant la réception du mot de supervision d'erreurs complété provenant du répéteur-régénérateur le plus lointain, c'est-à-dire du répéteur-régénérateur local de la station surveillée 2. Le front avant de cette impulsion d'initialisation active une bascule monostable 703 à travers des bornes 7012 et 7031. La bascule monostable 703 fournit une impulsion de commande à un circuit de porte 705 qui laisse passer pendant la durée de l'impulsion de commande le signal à basse fréquence $LF_1$ produit par un générateur 704.

Le signal à basse fréquence $LF_1$ modulé par l'impulsion de commande est appliqué à la borne d'entrée 5033 du filtre directionnel de sortie 503, à la borne d'entrée 5061 du démodulateur 506 et à la borne d'entrée 5093 du diviseur de fréquence 509.

Il ressort clairement de la description qui précède que les mots de supervision d'erreurs sont envoyés de chaque répéteur-régénérateur sur la liaison de retour sous la forme de mots arythmiques start-stop et que les signaux locaux nécessaires pour commander dans chaque répéteur-régénérateur la détection, le comptage et l'envoi de l'information de supervision d'erreurs sont tous synchronisés avec l'impulsion de commande.

**Revendications**

1. Système de surveillance de répéteurs-régénérateurs (P, P + 1) insérés en parallèle sur une liaison de télécommunication (3, 4) entre une station surveillante (1) et une station surveillée (2),

ladite liaison de télécommunication comprenant une voie d'aller (3) pour transmettre des signaux de la station surveillante (1) vers la station surveillé (2) et une voie de retour (4) pour transmettre des signaux de la station surveillé (2) vers la station surveillante (1),

ladite station surveillante (1) comprenant des moyens (501, 502, 503, 703, 704, 705) pour envoyer et mélanger en fréquence sur la voie d'aller (3) des signaux de données avec un signal à une unique fréquence basse prédéterminée ($LF_1$) modulé par des impulsions périodiques et des moyens (601, 602, 603, 606, 508, 701) pour recevoir et séparer en fréquence sur la voie de retour (4) des signaux de données et des mots binaires de supervision d'erreurs assignés respectivement à la qualité de fonctionnement desdits répéteurs-régénérateurs (P),

chaque répéteur-régénérateur (P) comprenant des moyens (301) de séparation en fréquence pour prélever le signal à basse fréquence modulé ($LF_1$) sur la voie d'aller (3), des moyens (306) pour démoduler les impulsions périodiques à partir du signal à basse fréquence modulé prélevé ($LF_1$), des moyens (305, 405) pour recueillir des paramètres binaires et notamment des signaux d'erreurs binaires dépendant de la qualité du fonctionnement du répéteur-régénérateur (P) suivant les voies d'aller et de retour (3, 4), des moyens (307) pour déduire desdits paramètres et signaux d'erreurs binaires un mot binaire de supervision d'erreurs, un registre à décalage (308), des moyens modulateurs (310) recevant le signal à basse fréquence ($LF_1$) à partir du signal à basse fréquence modulé prélevé et des moyens de mélange en fréquence (403),

caractérisé en ce que dans chaque répéteur-régénérateur (P), une impulsion démodulée par les moyens de démodulation (306) commande le chargement du mot binaire de supervision d'erreurs dans le registre à décalage (308) en y ajoutant un bit de start et un bit de stop, des moyens (309) commandés par les moyens de démodulation (306) lisent le mot binaire de supervision d'erreurs avec les bits start et stop, les moyens modulateurs (310) recevant le signal à basse fréquence ($LF_1$) le modulent par le mot binaire de supervision d'erreurs lu avec les bits start et stop et le transmettent aux moyens de mélange en fréquence (403).

2. Système conforme à la revendication 1, caractérisé en ce que, dans chaque répéteur-régénérateur (P), les moyens de recueil des paramètres binaires et notamment des signaux d'erreurs binaires comprennent des moyens (305, 405) pour détecter et compter des erreurs respectivement dans les signaux de données transmis sur les voies d'aller et de retour (3, 4) et les moyens de déduction comprennent des moyens (307) pour coder les comptes d'erreurs respectifs aux voies d'aller et retour en ledit mot binaire de supervision d'erreurs,

et en ce que, en réponse au front avant de chaque impulsion démodulée, lesdits moyens de démodulation (306) de chaque répéteur-régénérateur commandent successivement le transfert des comptes d'erreurs respectifs des moyens de détection et de comptage d'erreurs (305, 405) dans les moyens de codage (307), le transfert dudit mot binaire de supervision d'erreurs desdits moyens de codage (307) dans le registre à décalage (308) ainsi que le chargement des bits start et stop dans le registre à décalage (308), et la synchronisation desdits moyens de la lecture (309).

3. Système conforme à la revendication 2, caractérisé en ce que les moyens de lecture comprennent un diviseur de fréquence (309) qui reçoit le signal à fréquence basse modulé prélevé sur la voie d'aller (3) et qui est synchronisé sur les fronts avant des impulsions périodiques démodulées (306), pour commander la lecture des bits du mot de supervision d'erreurs chargé avec les bits start e stop dans le registre à décalage (308) avec une fréquence de lecture qui est un sous-multiple entier de la fréquence prédéterminée du signal à basse fréquence (LF₁).

4. Système conforme à l'une des revendications 1 à 3, caractérisé en ce que chaque répéteur-régénérateur (P) comprend en outre des moyens (401) de séparation en fréquence pour prélever le signal à fréquence basse qui est modulé par les mots de supervision d'erreurs avec leurs bits start et stop et qui est mélangé avec les signaux de données transmis sur la voie de retour (4) par les répéteurs-régénérateurs (P + 1) en amont du répéteur-régénérateur considéré, et des moyens (406) pour démoduler le signal à fréquence basse modulé prélevé sur la voie de retour (4) en vue de charger le registre à décalage (308) par lesdits mots de supervision d'erreurs avec leurs bits start et stop transmis en amont sur la voie de retour (4), chacun de ces mots étant lu par les moyens de lecture (309) et modulant le signal à base fréquence reçu de la voie d'aller (3) dans les moyens de modulation (310).

**Patentansprüche**

1. Überwachungssystem für regenerative Verstärker enthaltende Fernmeldeverbindungen, bei welchen die Verstärker (P, P + 1) parallel in die Fernmeldeverbindung (3, 4) zwischen einem überwachenden Fernsprechamt (1) und einem überwachten Fernsprechamt (2) gelegt sind, die Fernmeldeverbindung eine Hinverbindungsstrecke (3) zur Übertragung von Signalen des überwachenden Fernsprechamtes (1) zum überwachten Fernsprechamt (2) und eine Rückverbindungsstrecke (4) zur Übertragung von Signalen des überwachten Fernsprechamtes (2) in das überwachende Fernsprechamt (1) aufweist, das überwachende Fernsprechamt (1) eine Einrichtung (501, 502, 503, 703, 704, 705) zur Abgabe von Datensignalen auf die Hinverbindungsstrecke (3) und zur Frequenzmischung mit einem Signal mit einer einzigen und vorgegebenen Niederfrequenz (LF₁), das durch periodische Impulse moduliert ist, und eine Einrichtung (601, 602, 603, 606, 508, 701) zum Empfangen und zum frequenzmässigen Trennen auf der Rückverbindungsstrecke (4) von Datensignalen und binären Worten zur Überwachung von der Betriebsqualität der regenerativen Verstärker (P) betreffenden Fehlern umfasst; wobei jeder regenerative Verstärker (P) eine Einrichtung (301) zur Frequenztrennung aufweist, um das Signal mit modulierter Niederfrequenz (LF₁) auf der Hinverbindungsstrecke (3) zu überwachen, eine Einrichtung (306) zur Demodulation der periodischen Impulse zu Beginn des überwachten modulierten niederfrequenten Signales (LF₁), eine Einrichtung (305, 405) zum Erfassen binärer Parameter und insbesondere binärer Fehlersignale, die von der Betriebsqualität des regenerativen Verstärkers (P) abhängig sind, auf der Hinverbindungsstrecke (3) und der Rückverbindungsstrecke (4), eine Einrichtung (307) zum Ableiten eines binären Wortes der Fehlerüberwachung aus diesen Parametern und deren Fehlersignalen, ein Schieberegister (308), eine Modulationseinrichtung (310) zum Empfang des niederfrequenten Signales (LF₁) zu Beginn des überwachten modulierten niederfrequenten Signales und eine Einrichtung (403) zum Mischen der Frequenzen aufweist, dadurch gekennzeichnet, dass in jedem regenerativen Verstärker (P) ein durch die Demodulationseinrichtung (306) demodulierter Impuls die Eingabe des binären Wortes zur Fehlerüberwachung in das Schieberegister (308) steuert und dort ein Startbit und ein Stoppbit hinzufügt, eine durch die Demodulationseinrichtung (306) gesteuerte Leseeinrichtung (309) das binäre Fehlerüberwachungswort mit den Start- und Stoppbits abliest, die Modulationseinrichtung (310), die das Niederfrequenzsignal (LF₁) erhält, es mit dem binären Fehlerüberwachungswort, das mit den Start- und Stoppbits abgelesen ist, moduliert und es in die Frequenzmischeinrichtung (403) überträgt.

2. Überwachungssystem nach Anspruch 1, dadurch gekennzeichnet, dass in jedem regenerativen Verstärker (P) die Einrichtung zur Erfassung der binären Parameter und insbesondere der binären Fehlersignale Mittel (305, 405) zum Feststellen und Zählen der Fehler in den Datensignalen aufweist, die auf der Hinübertragungsstrecke und auf der Rückübertragungsstrecke (3, 4) übertragen werden, und die Ableitungseinrichtung (307) Mittel zum Codieren entsprechender Fehlerzahlen auf den Hin- und Rückübertragungsstrecken in das binäre Fehlerüberwachungswort umfasst; und dadurch gekennzeichnet, dass als Antwort auf die Vorderfront jedes demodulierten Impulses die Demodulationseinrichtung (306) jedes regenerativen Verstärkers nacheinander die Übertragung der betreffenden Fehlerzahlen der Mittel (305, 405) zum Feststellen und Zählen der Fehler in die Codierungsmittel (307), die Übertragung des binären Fehlerüberwachungswortes der Codiermittel (307) in das Schieberegister (308) sowie das Eingeben der Start- und Stoppbits in das Schieberegister (308) und die Synchronisation der Leseeinrichtung (309) steuern.

3. Überwachungssystem nach Anspruch 2, dadurch gekennzeichnet, dass die Leseeinrichtung einen Frequenzteiler (309) aufweist, der das modulierter Niederfrequenzsignal, das auf der Hinübertragungsleitung (3) vorgegeben ist, empfängt und der auf die Vorderfronten der demodulierten periodischen Impulse (306) synchronisiert ist, um das Ablesen der Bits des Fehlerüberwachungswortes, das mit den Start- und Stoppbits in das Schieberegister (308) eingegeben ist mit einer Lesefrequenz zu steuern, die ein ganzzahliger Bruchteil der vorgegebenen Frequenz des Niederfrequenzsignals (LF$_1$) ist.

4. Überwachungssystem nach einem der Ansprüche 1 bis 3, dadurch gekennzeichnet, dass jeder generative Verstärker (P) unter anderem eine Frequenztrenneinrichtung (401) zur Überwachung des Niederfrequenzsignales aufweist, das mit den Fehlerüberwachungsworten mit ihren Start- und Stoppbits moduliert und mit den Datensignalen vermischt ist, die auf der Rückübertragungsstrecke (4) durch die regenerativen Verstärker (P + 1) übertragen sind, die vor den betrachteten regenerativen Verstärkern liegen, und Mittel (406) zum Demodulieren des auf der Rückübertragungsstrecke (4) überwachten modulierten Niederfrequenzsignals im Hinblick auf das Laden des Schieberegisters (308) durch die vorher auf der Rückübertragungsleitung (4) übertragenen Fehlerüberwachungsworte mit ihren Start- und Stoppbits aufweist, wobei jedes dieser Worte durch die Leseeinrichtung (309) ausgelesen ist und das auf der Hinübertragungsstrecke (3) empfangene Niederfrequenzsignal in der Modulationseinrichtung (310) moduliert.

## Claims

1. System for monitoring repeater-regenerators (P, P + 1) parallel-connected on a telecommunication link (3, 4) between a monitoring station (1) and a monitored station (2),

said telecommunication link comprising a forward line (3) for transmitting signals from the monitoring station (1) to the monitored station (2) and a backward line (4) for transmitting signals from the monitored station (2) to the monitoring station (1),

said monitoring station (1) comprising means (501, 502, 503, 703, 704, 705) for sending and frequency mixing data signals with a predetermined single low frequency signal (LF$_1$) modulated by periodical pulses on the forward line (3) and means (601, 602, 603, 606, 508, 701) for receiving and frequency separating data signals and error supervisory binary words respectively assigned to the performance of said repeaters-regenerators on the backward line (4),

each repeater-regenerator (P) comprising frequency separating means (301) for taking the modulated low frequency signal (LF$_1$) from the forward line (3), means (306) for demodulating the periodical pulses from the taken modulated low frequency signal (LF$_1$), means (305, 405) for collecting binary parameters and particularly binary error signals dependent on the performance of the repeater-regenerator (P) along the forward and backward lines (3, 4), means (307) for deducing from said parameters and binary error signals an error supervision binary word, a shift register (308), modulator means (310) receiving the low frequency signal (LF$_1$) from the taken modulated low frequency signal, and frequency mixing means (403),

characterized in that in each repeater-regenerator (P), a demodulated pulse by the demodulating means (306) controls the loading of the error supervisory binary word into the shift register (308) by completing it by a start bit and a stop bit, means (309) controlled by the demodulating means (306) read the error supervisory binary word with the start and stop bits, the modulator means (310) receiving the low frequency signal (LF$_1$) modulate it by the error supervisory binary word read with the start and stop bits and transmit it to the frequency mixing means (403).

2. System according to claim 1, characterized in that in each repeater-regenerator (P), the means for collecting binary parameters and particularly binary error signals comprise means (305, 405) for detecting and counting errors in the data signals transmitted on the forward and backward lines (3, 4) respectively, and the deducing means comprise means (307) for encoding the respective error counts for the forward and backward lines into said error supervisory binary word,

and in that, responsive to the fore-front of each demodulated pulse, said demodulating means (306) of each repeater-regenerator successively control the transfer of the respective error counts from the error detecting and counting means (305, 405) into the encoding means (307), the transfer of said error supervisory binary word from said encoding means (307) into the shift register (308) as well as the loading of the start and stop bits into the shift register (308), and the synchronisation of said reading means (309).

3. System according to claim 2, characterized in that the reading means comprise a frequency divider (309) that receives the modulated low frequency signal taken from the forward line (3) and that is synchronized with the demodulated periodical pulses (306), for controlling the read of the error supervisory word bits loaded with the start and stop bits into the shift register at a read frequency that is an integer submultiple of the predetermined frequency of the low frequency signal (LF$_1$).

4. System according to any one of claims 1 to 3, characterized in that each repeater-regenerator (P) further comprises frequency separating means (401) for taking the low frequency signal that is modulated by the error supervisory words with their start and stop bits and that is mixed with the data signals transmitted from the repeater-regenerators (P + 1) above the considered repeater-regenerator on the backward line (4), and means (406) for demodulating the modulated low frequency signal taken from the backward line (4) to load the shift register (308) by said error supervisory words with their start and stop bits transmitted up the backward line (4), each of these words being read by the reading means (309) and modulating the low frequency signal received by the modulating means (310) from the forward line (3).

# FIG.1

REPETEUR -
REGENERATEUR

STATION
SURVEILLANTE

P

P+1

STATION
SURVEILLÉE

0 018 295

FIG.2

# FIG.3